# EUROPEAN PATENT SPECIFICATION

(11) **EP 2 576 355 B1**
(45) Date of publication and mention of the grant of the patent: **10.12.2014**
(21) Application number: 11731098.7
(22) Date of filing: 27.05.2011
(51) Int. Cl.: B65B 51/14, B65F 1/06, B29C 65/22, B65B 51/30, B29C 65/00, B29C 65/74

(54) **BAG SEALER AND SEALING UNIT**
VERSCHLIESSVORRICHTUNG FÜR SÄCKE UND VERSCHLIESSEINHEIT
APPAREIL DE SCELLAGE DE SAC ET UNITÉ DE SCELLAGE

(30) Priority: 12.10.2010 IT RM20100539; 28.05.2010 IT RM20100288
(43) Date of publication of application: 10.04.2013
(73) Proprietor: EN4en - Engineering For Environment S.r.l., 06132 Perugia PG (IT)
(72) Inventor: FRANCISCI, Piero, I-06132 Perugia PG (IT)
(74) Representative: Romano, Giuseppe
(86) International application number: PCT/IB2011/052326
(87) International publication number: WO 2011/148348

(56) References cited:
- DE-A1- 2 014 974
- DE-U1-202008 016 028
- GB-A- 2 059 337
- GB-A- 2 067 462
- GB-A- 2 272 361
- US-A- 2 695 150
- US-A- 4 433 527
- US-A- 5 326 416
- US-A- 6 041 580

## Description

The present invention relates to a bag sealer and to a sealing unit comprising a bag sealer, conceived in particular for operating cyclically and in an automatic manner the sealing of waste collection bags.

### History of the Technology

As is widely known, the sealing of collection bags, especially of bags used in waste collection in general, is particularly useful as the irreversible closing of such a bag prevents the spreading of bad smells, ensures that there be no accidental leak of waste (something that cannot be guaranteed when the bags are closed by traditional methods), and moreover facilitates transport operations.

### Description of the prior art

In the current state of the art, manually driven bag-sealing apparatuses are known, usually associated to a suction system generating vacuum in the same bags concomitantly to the closing; said apparatuses usually comprise a sealing clamp consisting of a pair of members opposable to each other by a motion lying on a common plane, between which the bag to be sealed is interposed.

Therefore, once the bag is accurately positioned between the two members, the former is sealed, and therefore irreversibly closed, by closing the clamp, as the sealing members comprise a high-temperature surface that melts the edges of the same bag therebetween.

A bag sealer according to the preamble of claim 1 is known from document US 2 695 150.

### Drawbacks of the prior art

To date, the above-mentioned known systems are commonly used in the near-totality of the most ordinary applications; nevertheless, they entail significant drawbacks.

First of all, such systems are totally manual, meaning that both the correct positioning of the bag to be sealed, as well as the sealing operation, has necessarily to be carried out by an operator.

Supposing that in a kitchen a waste grinder is used, which discharges into a collection bag, but also generally in case the latter is filled in a traditional manner, in order to seal said bag such an operation will necessarily require an operator's intervention which should envisage the extracting and then the sealing thereof with traditional methods.

### Objects of the Invention

Object of the present invention is to solve the above-mentioned drawbacks by providing a sealer as defined in claim 1.

A further object of the present invention is to provide a sealing unit as defined in claim 8.

Additional features of the invention are defined in the corresponding dependent claims thereof.

### Advantages of the Invention

The present invention, by overcoming the mentioned problems of the known art, entails several evident advantages.
The sealer according to the present invention, in particular when arranged inside a sealing unit placed downstream of a waste grinder, is capable, as will be described in detail hereinafter in connection to a preferred embodiment thereof given herein by way of example and not for limitative purposes, of operating in a totally automatic way the sealing of the (waste-containing) bag and its automatic ejection from the unit itself once sealed.
According to an aspect of the invention, the automatic sealing occurs in a manner such as to make this operation cyclic, nearly totally eliminating manual interventions.
In other words, by the sealing unit subject-matter of the present invention it is possible to arrange a bag, downstream of the grinder or more generally in a position such as to collect waste, and benefit from several filling / sealing / ejecting cycles with no need to worry about intervening every time a cycle has been completed.

### Brief description of the drawings

Still further advantages, as well as the features and modes of employ of the present invention will be made apparent in the following detailed description of a preferred embodiment thereof, given by way of example and not for limitative purposes. Reference will be made to the figures of the annexed drawings, wherein:
Figures 1, 5-9, 11-13 show in various perspective views a sealer and a sealing unit according to the present invention in various working configurations;
Figures 2 and 4 show in perspective views the details of the sealer according to the present invention;
Figure 3 shows in a side view the sealer and the sealing unit according to the present invention;
Figure 4A shows a detail of the sealer according to the present invention, according to an alternative embodiment, with respect to the detail shown in Figure 4;
Figure 10 shows the sealing unit according to the present invention in a perspective section.

### Detailed description of the drawings

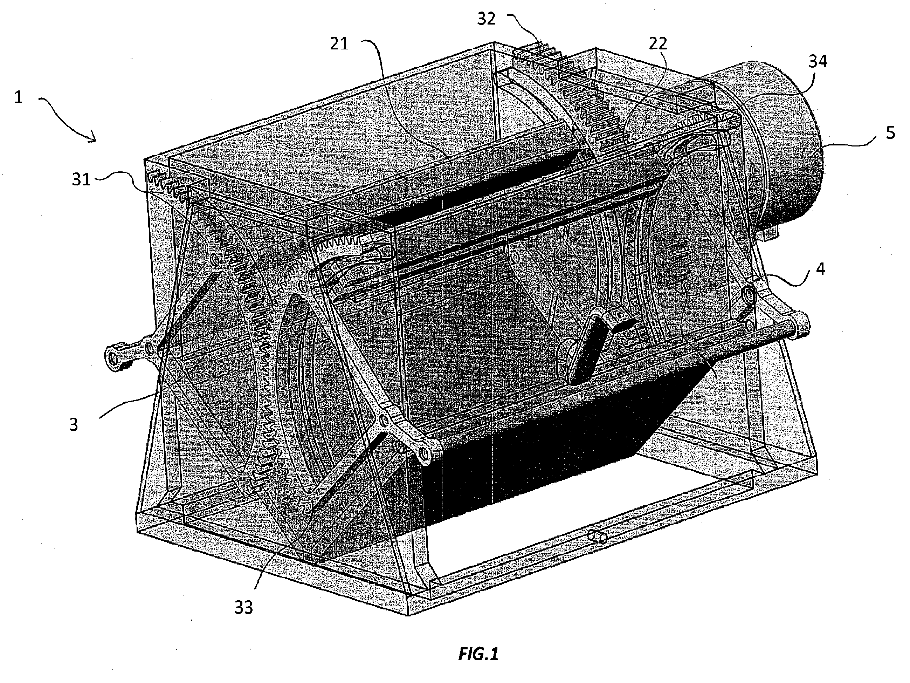

Referring to Figure 1, a sealer 1 subject-matter of the present invention is shown in a perspective view.
The sealer 1 comprises a pair of sealing members 21, 22 which are driven by a system 3 giving them an approaching/moving away motion, as will be described in detail hereinafter.
In particular, the pair of sealing members 21 and 22 are apt to assume a first working configuration in which they cooperate with each other to seal a bag interposed therebetween (not depicted), preferably dedicated to waste collection, and a second resting configuration.
The bag is preferably of biodegradable type, so as to be disposed of together with its content.
In particular, in Figure 1 the two sealing members 21 and 22 are depicted in a position intermediate between the two configurations mentioned above. Therefore, it will be appreciated that the driving system 3 is apt to give the approaching/moving away motion so as to make the sealing members 21 and 22 assume respectively the working and resting configurations.
In particular, as well highlighted by the figure, the sealing members 21 and 22 during their motion sweep a pair of surfaces defining therebetween a convex space region.
In the Figure a box-type body 4 is also shown, in phantom lines, which is apt to house therein the sealer 1 so as to constitute a sealing unit as will be described in detail below.
Preferably, the sealing members 21, 22 are sealing rods which define, when in a working configuration, a sealing line at which they are substantially set in contact while sealing the bag (not shown) interposed therebetween.
In the preferred embodiment shown here by way of example and not for limitative purposes, the driving system 3 comprises for each sealing rod 21 and 22 respectively a first 31, 32 and a second 33, 34 pair of gears, each pair of gears being connected therebetween by a tie member, onto which the respective sealing rod is integrally positioned.
Preferably, the first pair of gears 31, 32 comprises a driving gear 32, set in rotation by a driving pinion 51 in turn driven by a motor 5, preferably of electric type.
Then, the driving pinion 51 acts on the driving gear 32, which drags the gear 31 by their connection, made just by the respective tie member.
The two pairs of gears 31, 32 and 33, 34 advantageously cooperate therebetween in a manner such that the rotation taken by the first pair by means of the pinion 51 transmits motion to the second pair 33, 34, giving to the rods 21 and 22 a synchronous motion. Each of the sealing rods sweeps a respective curved surface during the dragging motion of the respective pair of gears. Therefore, the convex space region defined therebetween has a cusp at the sealing line.
The gears of the first and second pair are preferably of sector type, and have an extension of about one quarter of circumference, or the gear extension needed to carry out the motion of the sealing rods, as will be better described hereinafter.

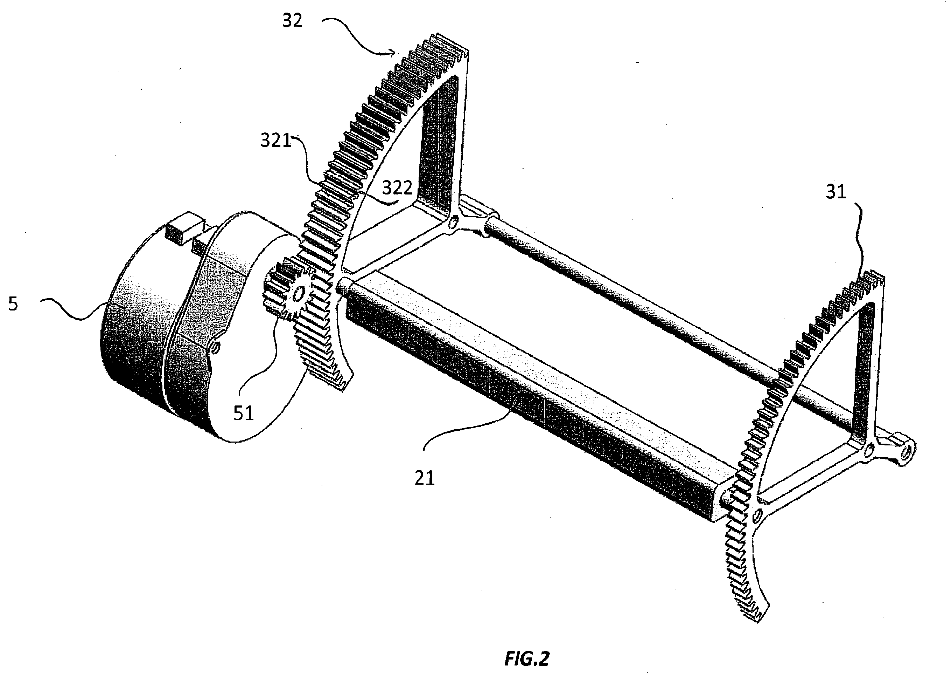

Referring to Figure 2, the first pair of gears 32, 31 is shown, in which the driving gear 32, set in rotation by the pinion 51, has a toothed periphery comprising a first portion 321 apt to cooperate just with the pinion 51, and a second portion 322, adjacent to the first portion 321, and apt to cooperate with the driven gear opposed thereto, of the second pair of gears (not shown). Thus, the pinion 51 does not interfere with the driven gear, thereby making a drive chain which finally drives the sealing rods (of which only rod 21 is shown in the picture).

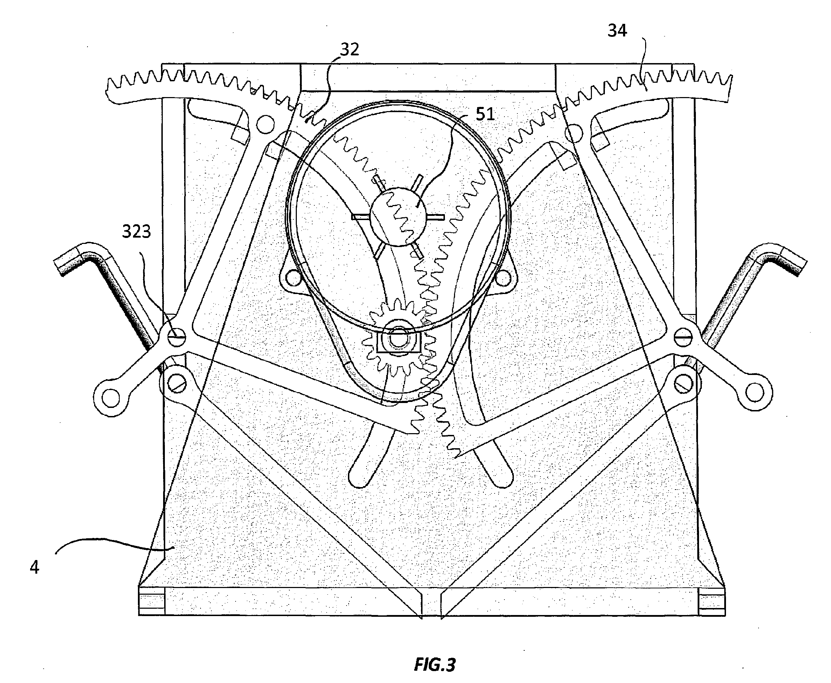

Referring to next Figure 3, the sealer 1 subject-matter of the present invention is shown in a side view. In particular, the driving pinion 51 can be seen, positioned along the first portion of the toothed periphery of the driving gear 32. The latter, being rotatably connected at a center 323 thereof to an external frame, which in the case described herein is the above-introduced box-type body 4, is set in rotation about its center and, by cooperating with the driven gear 34 thanks to their toothed profiles, causes the approaching/moving away of the sealing rods (not shown in the figures) thereby sweeping surfaces shaped like arcs of circumference.

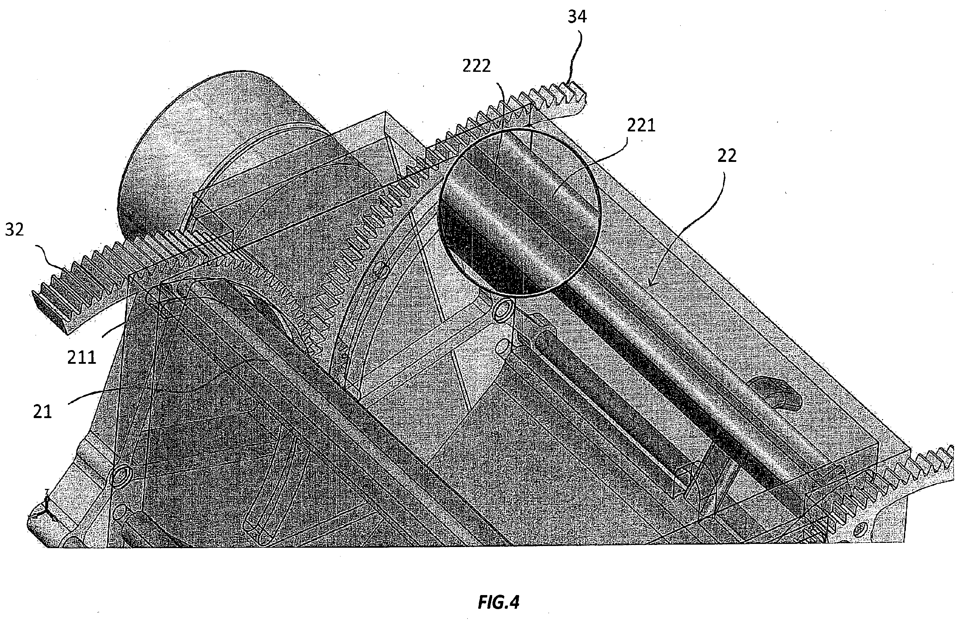

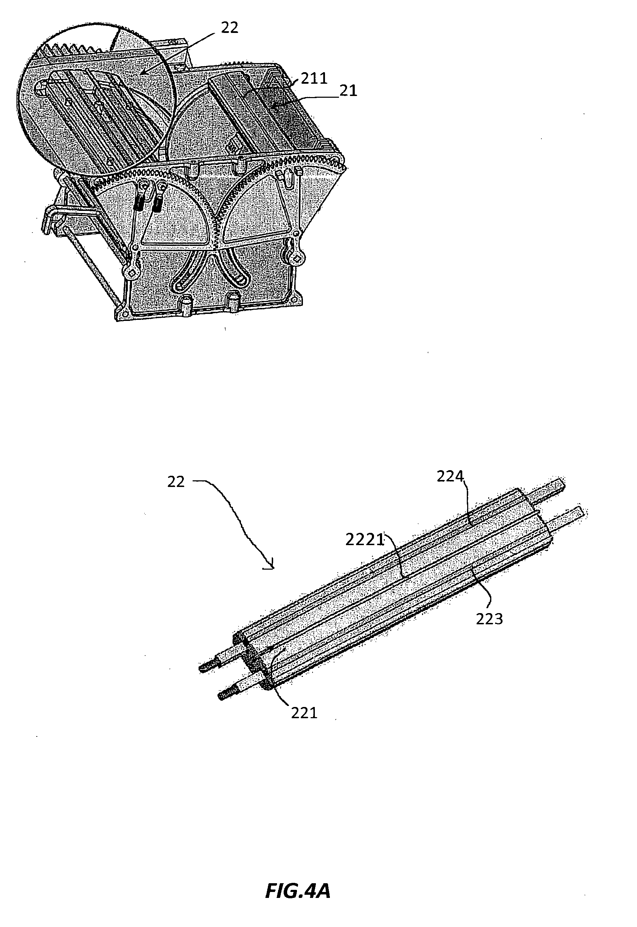

Referring to next Figure 4, a detail of the sealing rod 22 is shown by way of example. In particular, the latter comprises, on a working surface thereof at which bag sealing occurs, a support 221 of plastic material on which a sealing resistor 222, preferably made of constantan is obtained, power-supplied by a metal core inside the plastic support 221.

Referring to next Figure 4A, the sealing rod 22 according to an alternative embodiment is described. In particular, in said alternative embodiment the sealing rod 22 comprises a first resistor 223, apt to operate a sealing at the bag portion lying along the sealing line, comprising waste therein. In this regard, it will be appreciated that the resistor 223, being preferably obtained in a bottom portion of the sealing rod 22, is the first to come in contact with the bag during the approaching motion of the sealing rods.

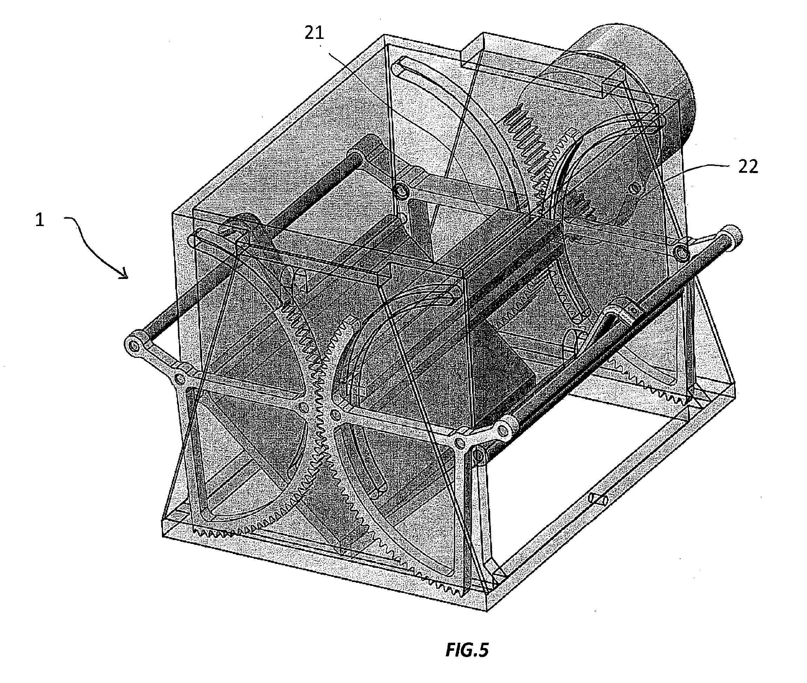

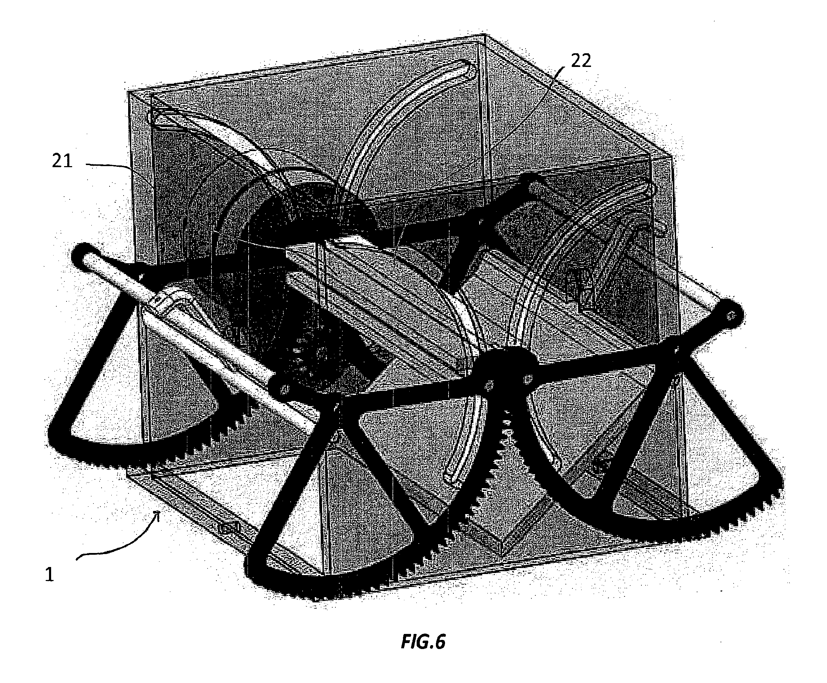

The rod 22 comprises cutting means 2221 centrally positioned thereon, which is apt to detach the bag portion comprising the waste (sealed by the resistor 223 introduced above), from the consecutive top portion of bag to be filled in a next discharge cycle. Lastly, the sealing rod 22 comprises a second resistor 224, obtained topwise along the sealing rod 22, which operates the sealing of a bottom base of the new bag, just to enable to fill it in the next cycle.
To this end, the cutting means 2221 is interposed between the first resistor 223 and the second resistor 224 and spaced therefrom, in a manner such as to enable the carrying out in sequence of the above-mentioned operations. In the embodiment given here by way of example said means comprises a third resistor 2221.
In fact, the heat dissipated by said resistor 2221 is such as to act on the bag portion already sealed by the first resistor 223, thereby obtaining detachment of the bag bottom portion, comprising waste, from the top portion (yet to be filled).
The resistors 2221, 223 and 224 are preferably made of constantan, and power-supplied by a metal core housed inside the plastic support 221.
Moreover, in both cases the rod 22 preferably comprises an outer coating of Teflon®, which advantageously ensures an effective sealing, preventing however the bag from getting stuck to the sealing resistor.
Always referring to both Figures 4 and 4A, the opposite sealing rod 21 preferably comprises only a respective plastic support 211, which anyhow proved sufficient to afford an opposing area to the sealing rod 22 needed for the above-described sealing operations.
The collection bags will preferably be provided having a length such as to allow plural waste collection cycles.
Initially, the bag is completely rolled up along an edge thereof, and begins to receive waste in its interior, so that the weight thereof causes its deployment inside the sealer. Preferably, during the path of the sealing rods the gears activate an apparatus regulating the temperature of the sealing resistor. The apparatus is designed so that the resistor may reach an optimum temperature for carrying out the sealing just when the rods get in the working configuration.
Referring to next Figures 5 and 6, it is shown the sealer 1 when the rods 21 and 22 are in a working configuration.
In such a configuration, the rods are opposed therebetween so as to seal a bag interposed therebetween (not shown) and define, as highlighted above, a sealing line placed at the cusp, formed by the surfaces shaped like arcs of circumference swept thereby, during their approaching motion, at their tangency line.

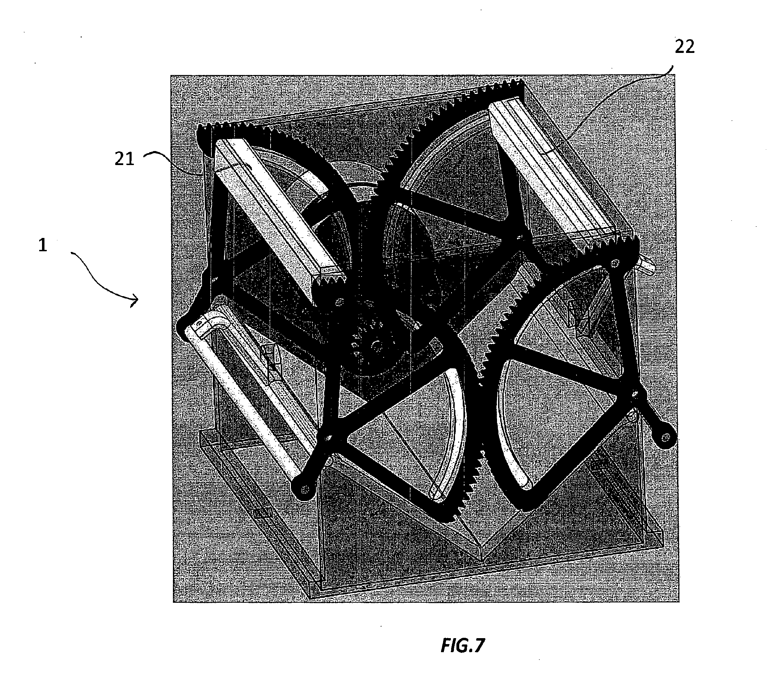

On the other hand, in next Figure 7 the sealer 1 subject-matter of the present invention is shown when in a resting configuration. As may be seen, in such a configuration the sealing rods 21 and 22 are spaced in order to receive therebetween the bag to be sealed.

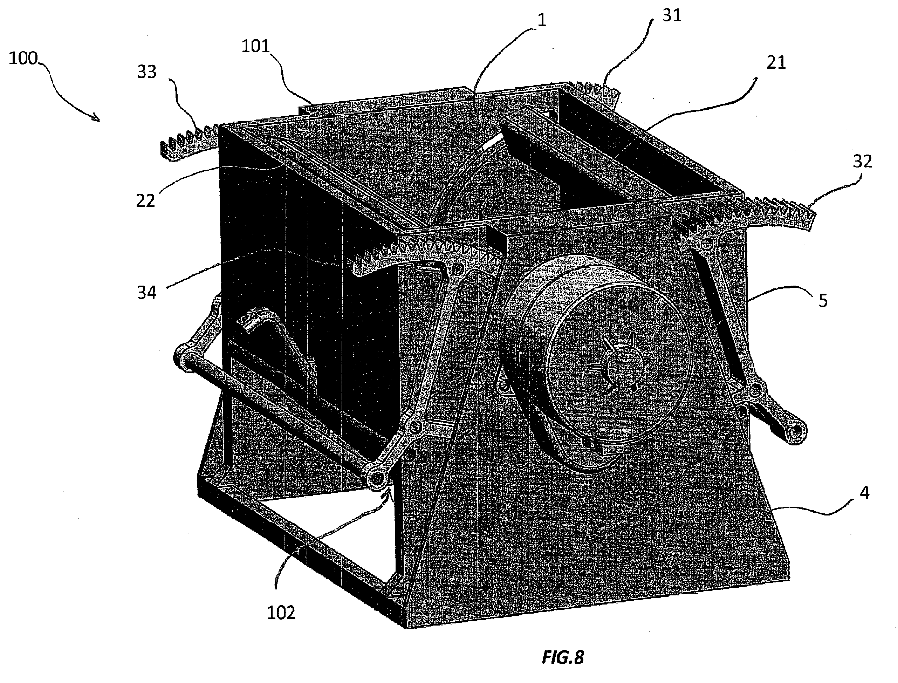

Referring to Figure 8, a sealing unit 100 is shown, it also subject-matter of the present invention, conceived in particular for the sealing of organic waste collection bags.
The unit 100 comprises the above-introduced box-type body 4, housing therein the above-described sealer 1 and defining a top inlet compartment 101, through which the collection bag is introduced, and a bottom base 102 for containing the bag during a filling thereof and ejecting the same following the sealing by activation of the sealer 1. In particular, the sealer 1 is positioned inside the box-type body 4 in a manner such that the convex space region faces onto the inlet compartment 101.
In fact, the unit 100 is preferably placed downstream of a grinder (not shown) which grinds organic waste and fills the bag placed substantially near to the inlet compartment 101 of the unit 100.
The bag is preferably rolled up along a peripheral edge thereof, and is unrolled by effect of gravity, owing to the weight of waste gradually collected therein, thus engaging the inside of the box-type body 4, thereby positioning itself between the sealing rods 21 and 22 of the sealer 1.
The bag is preferably provided with a length such as to allow plural waste collection cycles, according to what has been described above with regard to the sealing rods.
The sealing unit 100 is preferably prearranged with a system of sensors which are apt to activate the motor 5 for driving the sealing rods so as to give thereto an approaching motion, to reach the working configuration and seal the bag, when a predefined amount of waste is reached therein.
Alternatively, a manual control could advantageously be prearranged, such as a button arranged on a push-button panel obtained on the sealing unit; its actuation will control the starting of the system of gears and therefore the driving of the sealing rods.
By the peculiar approaching path of the sealing rods 21 and 22, occurring, as mentioned, by sweeping a pair of surfaces shaped like arcs of circumference defining a convex region, the sealing rods are capable of cooperating with the bag, still rolled up, near the inlet compartment 101, in order to prearrange the same bag for a successive cycle, by unrolling an initial portion thereof, so as to make the operations of sealing the bag and cyclically ejecting it from the body 4 very efficient, and completely eliminating the need of human intervention.
Moreover, the peculiar arc-like path followed by the sealing rods, which start from a position substantially at the inlet compartment 101 and proceed to the base 102 of the unit, causes them to be provided with a motion having a component along the vertical; thus, the sealing process is substantially improved, as any waste leaks during the closing and sealing process are prevented just by the rods 21 and 22.
Always referring to Figure 8, the pairs of gears 31, 32 and 33, 34 are preferably located externally to the box-type body 4.

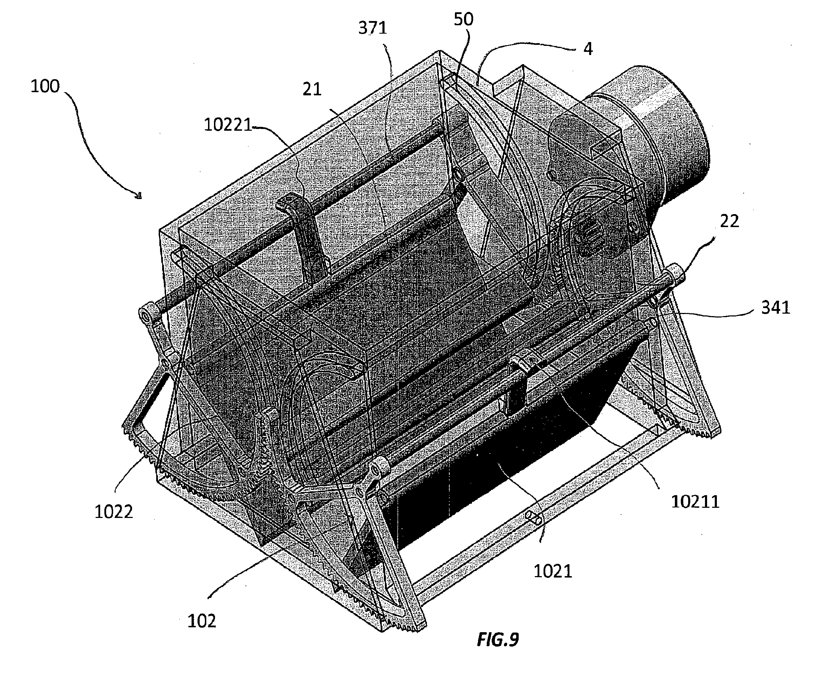

Referring now to next Figure 9, the sealing unit 100 subject-matter of the present invention is again shown in a perspective view. Referring to said figure, the base 102 for containing/ejecting the collection bag is now evident.
According to an aspect of the invention, the unit 100 preferably comprises an automatic system for opening/closing the base 102, associated to the sealing rods 21 and 22, so as to automatically eject the collection bag once it has been filled with a predefined amount of waste and then sealed.
According to the preferred embodiment of the invention given herein by way of example and not for limitative purposes, the bottom base 102 comprises a pair of doors 1021 and 1022, which can be opened toward the outside of the box-type body 4. Said doors 1021 and 1022 are connected thereto by hinges comprising elastic means such as to keep the doors normally closed (situation not shown in the figure). The automatic system for opening/closing comprises a pair of substantially L-shaped opposing members 10211, 10221 each obtained on a respective door 1021, 1022. Moreover, the automatic system comprises a pair of opposing members 341 and 371, each integral respectively to the sealing rod 22 and 21.
The opposing members 341 and 371 comprise each a connection bar 341 and 371 connecting respectively the pairs of gears 33, 34 and 32, 31 obtained eccentrically with respect thereto. Thus, each approaching motion of the sealing rods drives the respective bar against the L-shaped opposing member obtained on each door, thereby carrying out the opening of the bottom base for ejection of the bag after the latter has been sealed.
In particular, it can be seen in the figure that the sealing rods, in order to cause a complete opening of the base 102, are moved away from each other, proceeding in the same direction of their approaching motion, thereby exceeding the working configuration and moving away from each other to allow the falling of the sealed bag. Vice versa, the return of the sealing rods in a resting configuration, implying the reversing of the direction of rotation of the gears, entails the moving away of each bar from the related L-shaped member and therefore the closing of the bottom base, so as to restart a new filling cycle for a new bag.
Moreover, since the gears are obtained on the outside of the box-type body 4, they are connected to the sealing rods by round slots 50 obtained on the same box-type body.

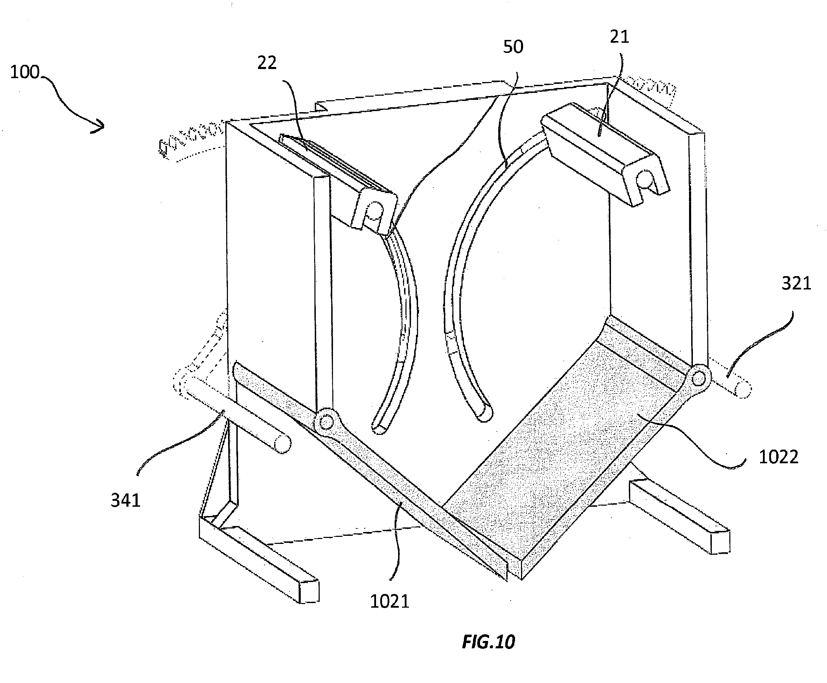

Referring to next Figure 10, a section of the sealing unit 100 according to the invention is shown, in which the slots 50 inside which the sealing rods 21 and 22, driven by the gears (hatched in the figure), slide, are evident.

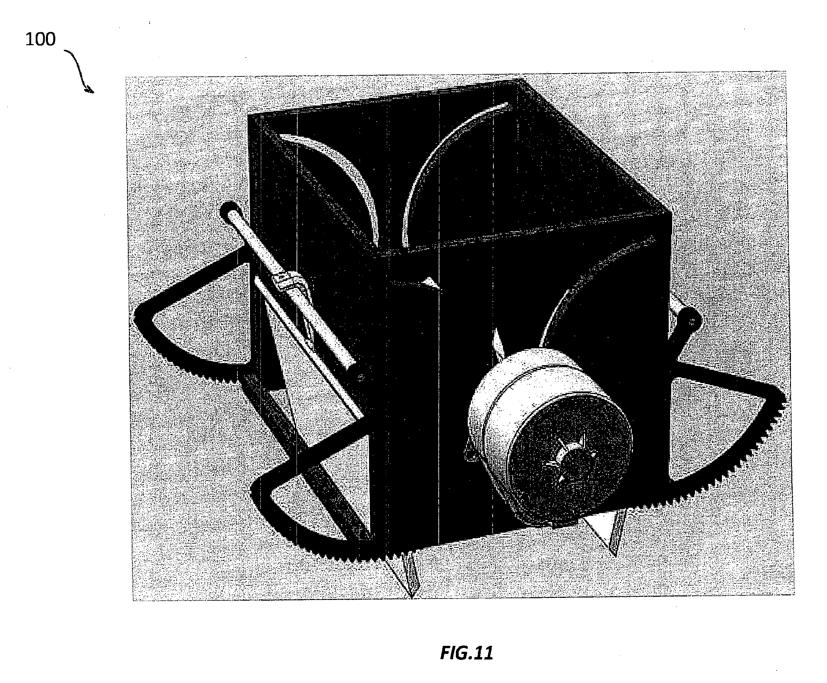

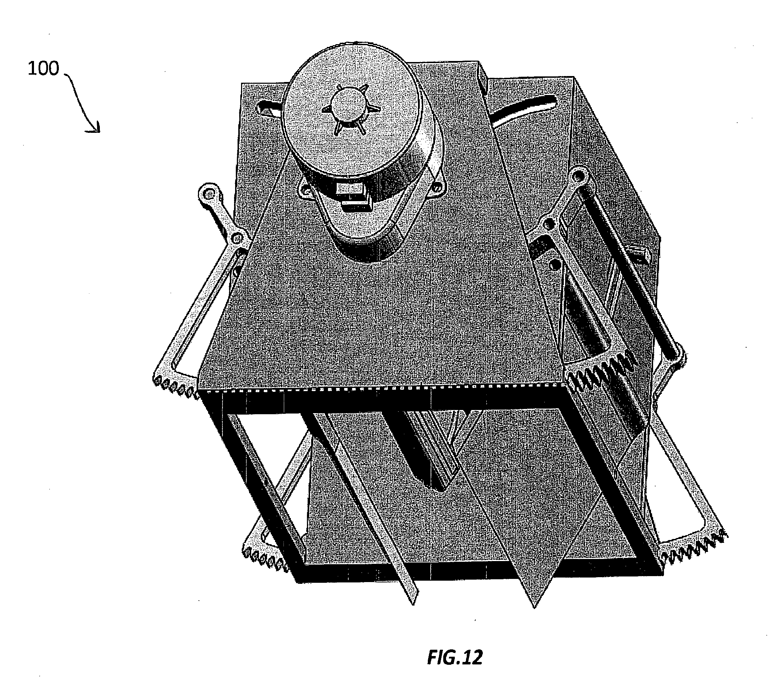

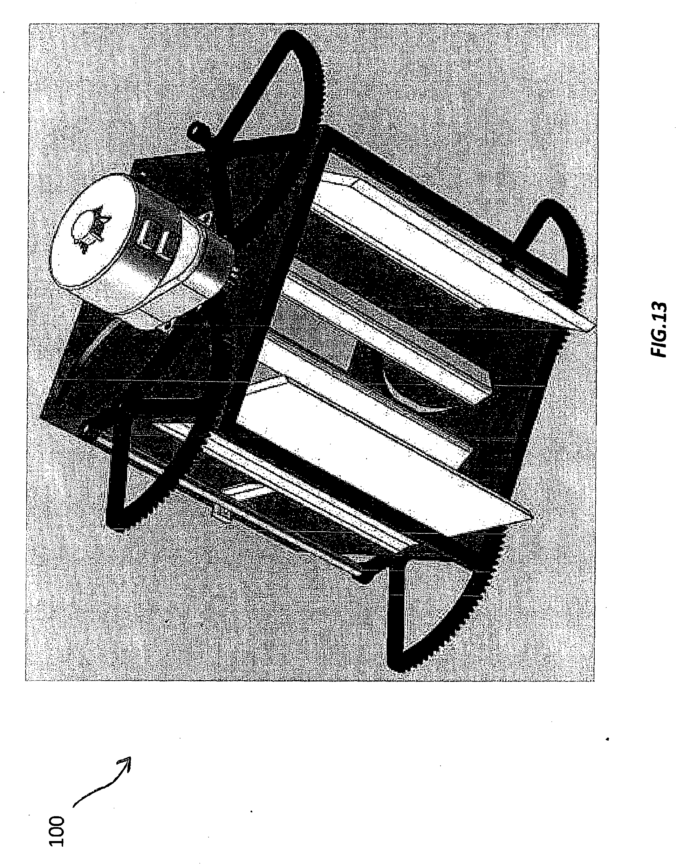

Finally, in the last Figures 11-13 the sealing unit 100 according to the invention is shown in various perspective views, when the bottom base is open for bag ejection.

The present invention has been hereto described with reference to preferred embodiments thereof. It is understood that other embodiments might exist, all falling within the concept of the same invention, and all comprised within the protective scope of the claims hereinafter.

## Claims

1. A bag sealer (1), comprising:
• a pair of sealing members (21, 22), apt to assume a first working configuration in which they cooperate to seal a waste collection bag interposed therebetween, and a second resting configuration;
• a system (3) for driving said pair of sealing members (21, 22), apt to give to said sealing members (21, 22) an approaching/moving away motion so as to make them assume said working/resting configurations;
wherein said sealing members (21, 22) are apt to sweep, during said motion, a pair of surfaces defining therebetween a convex space region, said convex space region defined therebetween having a cusp at the sealing line in said first working configuration, said pair of sealing members (21, 22) comprising a first (21) and a second (22) sealing rod, said rods (21, 22) when in a working configuration being apt to define a sealing line at a tangency zone of said pair of swept surfaces, said surfaces being curved, wherein said surfaces swept by said sealing rods (21, 22) define a cusp along said sealing line, wherein said driving system (3) comprises a first (31, 32) and a second (33, 34) pair of gears supporting respectively said first (21) and said second (22) sealing rod, each pair of gears (31, 32; 33, 34) being connected by a tie member onto which the respective sealing rod (21, 22) is integrally positioned, **characterized in that** said driving system (3) comprising a driving sprocket (51) apt to set in rotation a driving gear (32) of said first pair of gears (31, 32), said driving gear (32) having a toothed periphery comprising a first portion (321) apt to cooperate with said driving pinion (51), and a second portion (322) adjacent to said first portion (321) apt to cooperate with a corresponding driven gear (34) of said second pair of gears (33, 34).

2. The sealer (1) according to the preceding claim, wherein said pairs of gears (31, 32; 33, 34) are apt to cooperate therebetween so as to give to said first (21) and second (22) sealing rod a synchronous motion along respective paths shaped like arcs of circumference.

3. The sealer (1) according to any one of the preceding claims, wherein said gears of said first (31, 32) and second pair (33, 34) are of sector type.

4. The sealer (1) according to any one of the preceding claims, wherein at least one sealing rod (22) comprises, at a working surface thereof, a sealing resistor (222).

5. The sealer (1) according to any one of the preceding claims, wherein at least one sealing rod (22) comprises, along a working surface thereof, a first sealing resistor (223), a second sealing resistor (224) and cutting means (2221), said cutting means (2221) being interposed between said first (223) and second (224) resistor and spaced therefrom.

6. The sealer (1) according to the preceding claim, wherein said cutting means (2221) comprises a third sealing resistor (2221).

7. The sealer (1) according to claims 4 or 6, wherein said sealing resistors (2221, 223, 224; 222) are apt to be power-supplied by a metal core housed inside a support (211, 221) of plastic material placed at said working surface.

8. A sealing unit (100), comprising:
• a bag sealer (1) according to any one of claims 1 to 7;
• a box-type body (4) apt to house therein said sealer (1) and define a top inlet compartment (101) and a bottom base (102) for containing/ejecting the waste collection bag;
said sealer (1) being positioned inside said box-type body (4) in a manner such that the convex space region faces onto said inlet compartment (101).

9. The sealing unit (100) according to the preceding claim, further comprising an automatic mechanism for opening/closing said bottom base for containing/ejecting controlled by said sealing members (21, 22).

10. The sealing unit (100) according to the preceding claim, wherein said bottom base (102) for containing/ejecting comprises a pair of doors (1021, 1022) that can be opened toward the outside of said box-type body (4) and connected thereto by a hinge-like connection comprising elastic means such as to keep said doors (1021, 1022) normally closed.

11. The sealing unit (100) according to claims 14 or 15, wherein said mechanism for opening/closing comprises a pair of L-shaped engagement members (10211, 10221), each obtained on a respective door (1021, 1022), and a pair of opposing members (341, 371) integral to said sealing members (22, 21) in a manner such that the latter, when in an approaching motion, drive each opposing member (341, 371) against the respective L-shaped engagement member (10211, 10221), carrying out the opening of the bottom base (102) when lying in a working configuration, and vice versa when in a moving away motion toward said resting configuration.

12. The sealing unit (100) according to the preceding claim and to a claim 4 to 8, wherein said L-shaped opposing members (10211, 10221) comprise a respective eccentric connecting bar (341, 371) for each pair of gears (33, 34; 31, 32) of said driving system (3).

## Patentansprüche

1. Verschließvorrichtung für Säcke (1), die umfasst:
• ein Paar von Verschließteilen (21, 22), die geeignet sind, eine erste Arbeitskonfiguration zu übernehmen, in der sie kooperieren, um einen Abfallsack zu verschließen, der dazwischen angeordnet ist, und eine zweite Ruhekonfiguration zu übernehmen;
• ein System (3) zum Antreiben des Paares von Verschließteilen (21, 22), das geeignet ist, den Verschließteilen (21, 22) eine sich nähernde/entfernende Bewegung zu verleihen, um sie die Arbeits-/Ruhekonfigurationen übernehmen zu lassen;
wobei die Verschließteile (21, 22) geeignet sind, während dieser Bewegung ein Paar von Oberflächen, die dazwischen einen konvexen Raumbereich definieren, zu schwenken, wobei der dazwischen definierte konvexe Raumbereich über einen Höcker bei der Schließlinie in der ersten Arbeitskonfiguration verfügt, wobei das Paar von Verschließteilen (21, 22) einen ersten (21) und einen zweiten (22) Verschließstab umfasst, wobei die Verschließstäbe (21, 22), wenn sie sich in einer Arbeitskonfiguration befinden, geeignet sind, eine Verschließlinie bei einer Berührungszone des Paares von geschwenkten Oberflächen zu definieren, wobei die Oberflächen gebogen sind, wobei die durch die Verschließstäbe (21, 22) geschwenkten Oberflächen einen Höcker entlang der Verschließlinie definieren, wobei das Antriebssystem (3) ein erstes (31, 32) und ein zweites (33, 34) Paar von Getriebezahnrädern umfasst, die den ersten (21) beziehungsweise den zweiten (22) Verschließstab unterstützen, wobei jedes Paar von Getriebezahnrädern (31, 32; 33, 34) durch ein Verbindungsteil verbunden ist, auf dem der jeweilige Verschließstab (21, 22) integral angeordnet ist, **dadurch gekennzeichnet, dass** das Antriebssystem (3) umfasst: ein Antriebskettenrad (51), das geeignet ist, um ein Antriebsgetriebezahnrad (32) des ersten Paares von Getriebezahnrädern (31, 32) in eine Drehung zu versetzen, wobei das Antriebsgetriebezahnrad (32) über eine gezahnte Peripherie verfügt, die umfasst: einen ersten Teil (321), der geeignet ist, mit dem Antriebsritzel (51) zu kooperieren, und einen zweiten (322) an den ersten Teil (321) angrenzenden Teil, der geeignet ist, mit einem entsprechenden Antriebsgetriebezahnrad (34) des zweiten Paares von Getriebezahnrädern (33, 34) zu kooperieren.

2. Verschließvorrichtung (1) gemäß dem vorangehenden Anspruch, wobei die Paare von Getriebezahnrädern (31, 32; 33, 34) geeignet sind, um miteinander zu kooperieren, um so dem ersten (21) und zweiten (22) Verschließstab eine synchrone Bewegung entlang entsprechender Pfade zu verleihen, die wie Bögen eines Kreisumfangs geformt sind.

3. Verschließvorrichtung (1) gemäß einem der vorangehenden Ansprüche, wobei die Getriebezahnräder von dem ersten (31, 32) und zweiten Paar (33, 34) die Form eines Kreissektors haben.

4. Verschließvorrichtung (1) gemäß einem der vorangehenden Ansprüche, wobei mindestens ein Verschließstab (22) bei einer darauf gebildeten Arbeitsoberfläche einen Verschließwiderstand (222) umfasst.

5. Verschließvorrichtung (1) gemäß einem der vorangehenden Ansprüche, wobei mindestens ein Verschließstab (22) entlang einer darauf gebildeten Arbeitsoberfläche, einen ersten Verschließwiderstand (223), einen zweiten Verschließwiderstand (224) und ein Schneidemittel (2221) umfasst, wobei das Schneidemittel (2221) zwischen dem ersten (223) und zweiten (224) Widerstand und zu diesen mit Abstand angeordnet ist.

6. Verschließvorrichtung (1) gemäß dem vorangehenden Anspruch, wobei das Schneidemittel (2221) einen dritten Verschließwiderstand (2221) umfasst.

7. Verschließvorrichtung (1) gemäß den Ansprüchen 4 oder 6, wobei die Verschließwiderstände (2221, 223, 224; 222) geeignet sind, durch einen Metallkern mit Energie versorgt zu werden, der im Inneren einer Unterstützung (211, 221) aus Kunststoff untergebracht ist, die bei der Arbeitsoberfläche angeordnet ist.

8. Verschließvorrichtungseinheit (100), die umfasst:
• eine Verschließvorrichtung für Säcke (1) gemäß einem der Ansprüche 1 bis 7;
• einen kastenartigen Körper (4), der geeignet ist, darin die Verschließvorrichtung (1) zu beherbergen und ein oberes Einlassfach (101) und eine untere Basis (102) zum Enthalten/Auswerfen des Abfallsackes zu definieren;
wobei die Verschließvorrichtung (1) im Inneren des kastenartigen Körpers (4) in einer Art und Weise angeordnet ist, dass der konvexe Raumbereich dem Einlassfach (101) zugewandt ist.

9. Verschließvorrichtungseinheit (100) gemäß dem vorangehenden Anspruch, die weiterhin umfasst: einen automatischen Mechanismus zum Öffnen/Schließen der unteren Basis zum Enthalten/Auswerfen, gesteuert durch die Verschließteile (21, 22).

10. Verschließvorrichtungseinheit (100) gemäß dem vorangehenden Anspruch, wobei die untere Basis (102) zum Enthalten/Auswerfen umfasst: ein Paar von Klappen (1021, 1022), die in Richtung der Außenseite des kastenartigen Körpers (4) geöffnet werden können und damit durch eine scharnierartige Verbindung verbunden sind, die ein elastisches Mittel umfasst, das die Klappen (1021, 1022) normalerweise geschlossen hält.

11. Verschließvorrichtungseinheit (100) gemäß den Ansprüchen 14 oder 15, wobei der Mechanismus zum Öffnen/Schließen umfasst: ein Paar von L-förmigen Eingriffteilen (10211, 10221), jedes auf einer entsprechenden Klappe (1021, 1022) erhalten, und ein Paar von gegenüberliegenden Teilen (341, 371), die integrale Bestandteile der Verschließteile (22, 21) sind, in einer Art und Weise, dass die Letzteren, wenn sie sich in einer sich nähernden Bewegung befinden, jedes gegenüberliegende Teil (341, 371) gegen das entsprechende L-förmige Eingriffteil (10211, 10221) treiben, wodurch das Öffnen der unteren Basis (102) ausgeführt wird, wenn sie in einer Arbeitskonfiguration liegen, und umgekehrt, wenn sie sich in einer entfernenden Bewegung in Richtung der Ruhekonfiguration befinden.

12. Verschließvorrichtungseinheit (100) gemäß dem vorangehenden Anspruch und einem der Ansprüche 4 bis 8, wobei die L-förmigen gegenüberliegenden Teile (10211, 10221) einen entsprechenden exzentrischen Verbindungsstab (341, 371) für jedes Paar von Getriebezahnrädern (33, 34; 31, 32) des Antriebssystems (3) umfassen.

## Revendications

1. Dispositif de scellement de sac (1) comprenant :
• une paire d'éléments de scellement (21, 22) appropriés pour adopter une première configuration de travail dans laquelle ils coopèrent pour sceller un sac de collecte de déchets intercalé entre eux, et une seconde configuration de repos ;
• un système (3) pour entraîner ladite paire d'éléments de scellement (21, 22) appropriés pour donner auxdits éléments de scellement (21, 22) un mouvement d'approche/d'éloignement afin de leur faire prendre lesdites configurations de travail/repos ;
dans lequel lesdits éléments de scellement (21, 22) sont appropriés pour balayer, pendant ledit mouvement, une paire de surfaces définissant entre elles une région d'espace convexe, ladite région d'espace convexe définie entre elles ayant une cuspide au niveau de la ligne de scellement dans ladite première configuration de travail, ladite paire d'éléments de scellement (21, 22) comprenant une première (21) et une seconde (22) tige de scellement, lesdites tiges (21, 22), lorsqu'elles sont dans une configuration de travail, étant aptes à définir une ligne de scellement au niveau d'une zone de tangence de ladite paire de surfaces balayées, lesdites surfaces étant incurvées, dans lequel lesdites surfaces balayées par lesdites tiges de scellement (21, 22) définissent une cuspide le long de ladite ligne de scellement, dans lequel ledit système d'entraînement (3) comprend une première (31, 32) et une seconde (33, 34) paire d'engrenages supportant respectivement ladite première (21) et ladite seconde (22) tige de scellement, chaque paire d'engrenages (31, 32 ; 33, 34) étant raccordée par un élément de lien sur lequel la tige de scellement (21, 22) respective est positionnée intégralement, **caractérisé en ce que** ledit système d'entraînement (3) comprend un pignon d'entraînement (51) approprié pour régler en rotation un engrenage d'entraînement (32) de ladite première paire d'engrenages (31, 32), ledit engrenage d'entraînement (32) ayant une périphérie dentée comprenant une première partie (321) appropriée pour coopérer avec ledit pignon d'entraînement (51), et une seconde partie (322) adjacente à ladite première partie (321) appropriée pour coopérer avec un engrenage entraîné (34) correspondant de ladite seconde paire d'engrenages (33, 34).

2. Dispositif de scellement (1) selon la revendication précédente, dans lequel lesdites paires d'engrenages (31, 32 ; 33, 34) sont appropriées pour coopérer entre elles afin de donner à ladite première (21) et à la seconde (22) tige de scellement, un mouvement synchrone le long de trajectoires respectives formées comme des arcs de circonférence.

3. Dispositif de scellement (1) selon l'une quelconque des revendications précédentes, dans lequel lesdits engrenages de ladite première (31, 32) et la seconde paire (33, 34) sont du type secteur denté.

4. Dispositif de scellement (1) selon l'une quelconque des revendications précédentes, dans lequel au moins une tige de scellement (22) comprend, au niveau de sa surface de travail, une résistance de scellement (222).

5. Dispositif de scellement (1) selon l'une quelconque des revendications précédentes, dans lequel au moins une tige de scellement (22) comprend, le long de sa surface de travail, une première résistance de scellement (223), une deuxième résistance de scellement (224) et des moyens de coupe (2221), lesdits moyens de coupe (2221) étant intercalés entre ladite première (223) et la seconde (224) résistance et espacés de ces dernières.

6. Dispositif de scellement (1) selon la revendication précédente, dans lequel lesdits moyens de coupe (2221) comprennent une troisième résistance de scellement (2221).

7. Dispositif de scellement (1) selon les revendications 4 ou 6, dans lequel lesdites résistances de scellement (2221, 223, 224; 222) sont appropriées pour être alimentées en courant, par un cordon métallique logé à l'intérieur d'un support (211, 221) de matière plastique placé au niveau de ladite surface de travail.

8. Unité de scellement (100) comprenant :
• un dispositif de scellement de sac (1) selon l'une quelconque des revendications 1 à 7 ;
• un corps de type boîte (4) approprié pour loger à l'intérieur de ce dernier ledit dispositif de scellement (1) et définir un compartiment d'entrée supérieur (101) et une base inférieure (102) pour contenir/éjecter le sac de collecte de déchets ;
ledit dispositif de scellement (1) étant positionné à l'intérieur dudit corps en forme de boîte (4) de sorte que la région d'espace convexe est orientée sur ledit compartiment d'entrée (101).

9. Unité de scellement (100) selon la revendication précédente, comprenant en outre un mécanisme automatique pour ouvrir/fermer ladite base inférieure pour le confinement/l'injection contrôlé(e) par lesdits éléments de scellement (21, 22).

10. Unité de scellement (100) selon la revendication précédente, dans laquelle ladite base inférieure (102) pour le confinement/éjection comprenant une paire de portes (1021, 1022) qui peuvent s'ouvrir vers l'extérieur dudit corps de type boîte (4) et raccordées à ce dernier par un raccordement en forme de charnière comprenant des moyens élastiques afin de maintenir lesdites portes (1021, 1022) normalement fermées.

11. Unité de scellement (100) selon les revendications 14 ou 15, dans laquelle ledit mécanisme pour l'ouverture/ fermeture comprend une paire d'éléments de mise en prise en forme de L (10211, 10221), chacun obtenu sur une porte (1021, 1022) respective, et une paire d'éléments (341, 371) opposés solidaires desdits éléments de scellement (22, 21) d'une manière telle que ces derniers, lorsqu'ils sont dans un mouvement d'approche, entraînent chaque élément (341, 371) opposé contre l'élément de mise en prise en forme de L (10211, 10221) respectif, réalisant l'ouverture de la base inférieure (102) lorsqu'elle est dans une configuration de travail, et vice versa lorsqu'elle est dans un mouvement d'éloignement vers ladite configuration de repos.

12. Unité de scellement (100) selon la revendication précédente, et selon les revendications 4 à 8, dans laquelle lesdits éléments opposés en forme de L (10211, 10221) comprennent une barre de raccordement excentrique (341, 371) respective pour chaque paire d'engrenages (33, 34 ; 31, 32) dudit système d'entraînement (3).
